(19) Europäisches Patentamt / European Patent Office / Office européen des brevets

(11) **EP 3 327 911 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
**H02M 1/08** (2006.01)　　**H02M 5/257** (2006.01)

(21) Anmeldenummer: **16200251.3**

(22) Anmeldetag: **23.11.2016**

(54) **VERFAHREN ZUR STEUERUNG EINES SCHALTMODULS BASIEREND AUF THYRISTOR-SCHALTELEMENTEN**

METHOD FOR CONTROLLING A SWITCH MODULE BASED ON THYRISTOR SWITCHING ELEMENTS

PROCÉDÉ DE COMMANDE D'UN MODULE DE COMMUTATION FAISANT APPEL À DES ÉLÉMENTS DE COMMUTATION DE THYRISTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.05.2018 Patentblatt 2018/22**

(73) Patentinhaber: **Maschinenfabrik Reinhausen GmbH**
**93059 Regensburg (DE)**

(72) Erfinder:
• **Engel, Stefan**
**52066 Aachen (DE)**
• **De Doncker, W. Rik**
**3000 Leuven (BE)**

(56) Entgegenhaltungen:
**EP-A1- 2 980 941　　US-A- 3 619 765**

• **STEFAN P ENGEL ET AL: "Control of thyristor-based commutation cells", ENERGY CONVERSION CONGRESS AND EXPOSITION (ECCE), 2012 IEEE, IEEE, 15. September 2012 (2012-09-15), Seiten 2030-2037, XP032467378, DOI: 10.1109/ECCE.2012.6342562 ISBN: 978-1-4673-0802-1**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Steuerung eines Schaltmoduls basierend auf Thyristor-Halbleiterschaltelementen. Insbesondere betrifft die Erfindung ein Verfahren zur Steuerung mindestens eines Schaltmoduls, wobei das Schaltmodul eine erste Kommutierungszelle und eine zweite Kommutierungszelle umfasst, die jeweils über eine erste Klemme und eine zweite Klemme einer Regelwicklung eines Regeltransformators zugeordnet sind. Jedes Schaltmodul ist mit einer Zuleitung und einer Ableitung versehen.

Die Druckschrift "Control of Thyristor-Based Commutation Cells" veröffentlicht im Rahmen des IEEE Energy Conversion Congress und Exposition(Raleigh, NC, USA, Sept. 2012) beschreibt ein Verfahren zur Steuerung einer Kommutierungszelle. Die beschriebene Systemanordnung umfasst einen Transformator mit einer Prrimärseite bestehend aus einer Stamm- und einer Regelwicklung und einer Sekundärseite mit einer Sekundärwicklung. Die Regelwicklung der Primärseite kann mittels einer Anordnung aus vier Halbleiterschaltelementen auf drei verschiedene Arten mit der Stammwicklung verschalten werden. In einem ersten Schaltmodus kann die Regelwicklung mit der Stammwicklung in Reihe geschalten werden. In einem zweiten Schaltmodus kann die Regelwicklung gegen die Stammwicklung geschalten werden. In einem dritten Schaltmodus kann die Regelwicklung aus dem Kreis heraus geschalten werden, d.h. über die Regelwicklung fließt kein Strom. Dementsprechend bilden die vier Halbleiterschaltelemente und die Regelwicklung zusammen ein Schaltmodul. Das Schaltmodul umfasst zwei Kommutierungszellen. Jede Kommutierungszelle umfasst einen oberen und einen unteren Strompfad. Die beiden Strompfade können jeweils durch ein antiparallel verschaltetes Thyristorpaar in die Zustände "leitend" oder "sperrend" geschaltet werden. Je nachdem in welchem Zustand sich die Thyristorpaare befinden, ist entweder der obere oder der untere Pfad dauerhaft stromdu rchflossen.

Die Druckschrift beschreibt zwei mögliche Kommutierungsstrategien zur Kommutierung eines Stroms von einem zunächst leitenden Pfad in einen zunächst sperrenden Pfad. Gemäß einer ersten Kommutierungsstrategie wird, sobald für eine Kommutierung günstige Bedingungen vorherrschen, ein vorher definierter Kommutierungszeitpunkt abgewartet. Ist dieser Kommutierungszeitpunkt erreicht, wird das zuvor leitend geschaltete Thyristorpaar deaktiviert und eine Totzeit abgewartet, die sicherstellt, dass kein unerwartetes Rückzünden der Thyristoren auftritt. Nach Ablauf der Totzeit wird das zuvor sperrende Thyristorpaar aktiviert, es erfolgt eine Kommutierung des Stroms vom zuvor leitenden Pfad auf den zuvor sperrenden Pfad und die Kommutierung ist abgeschlossen. Werden die für eine Kommutierung günstigen Bedingungen nicht erfüllt, wird eine Kommutierung gemäß einer zweiten Kommutierungsstrategie, auch als Zwangskommutierung oder Kommutierung über Kurzschluss bezeichnet, eingeleitet.

US 3,619,765 beschreibt eine Regelungsanlage sowie ein Verfahren zur Beschaltung von Wicklungsanzapfungen eines Transformators innerhalb eines elektrischen Netzwerks. Der Transformator verbindet eine Wechselspannungsquelle mit einer Last. Jeder Wicklungsanzapfung des Transformators ist ein Halbleiterschaltelement zugeordnet, das aus jeweils zwei antiparallel angeordneten Thyristoren besteht.

Gemäß dem Verfahren werden Schalthandlungen, die die Lastspannung erhöhen nur zugelassen, wenn der Leistungsfluss von der Wechselspannungsquelle zur Last zeigt. Schalthandlungen, die die Lastspannung senken, werden nur zugelassen, wenn der Leistungsfluss von der Last zur Wechselspannungsquelle zeigt. Zusätzlich werden Schalthandlungen in der Nähe der Nulldurchgänge von Laststrom und Wechselspannung unterdrückt. Auf diese Weise wird Kurzschlüssen der Wicklungsanzapfungen beim Umschalten von einer ersten Wicklungsanzapfung auf eine zweite Wicklungsanzapfung vorgebeugt.

Die im Stand der Technik bekannten Verfahren zur Steuerung von Kommutierungszellen berücksichtigen dabei keine verzerrten, insbesondere sich schnell verändernde Lastströme. Verzerrte Lastströme können bei den bekannten Verfahren, aufgrund unerwarteter Stromrichtungswechsel unerwartete Kurzschlüsse der zu beschaltenden Wicklungsteile zur Folge haben.

Thyristoren sind bekanntlich Leistungshalbleiter, die in der Leistungselektronik für das Schalten hoher elektrischer Ströme und Spannungen ausgelegt sind. Im Folgenden werden in Zusammenhang mit einem Thyristor die folgenden Begriffe verwendet:

»Hauptspannung« ist die Spannung zwischen einer Anode und einer Kathode eines Thyristors;
»Hauptstrom« ist der Strom durch die Kathode eines Thyristors;
»Steuerspannung« ist die Spannung zwischen dem Gate und der Kathode eines Thyristors, sie ist positiv, wenn das Gate im Vergleich zu der Kathode das höhere Potenzial hat;
»Steuerstrom« ist der Strom durch das Gate eines Thyristors;
»Zündstrom« ist ein in das Gate hinein fließender Steuerstrom, der Steuerstrom eines Thyristors ist dann positiv;
»Vorwärtsrichtung« ist die Richtung von Anode zu Kathode;
»Vorwärtsspannung« ist die in Vorwärtsrichtung gepolte Hauptspannung, die Hauptspannung ist dann positiv;
»Vorwärtsstrom« ist der in Vorwärtsrichtung fließende Hauptstrom, der Hauptstrom ist dann positiv;
»Rückwärtsrichtung« ist die Richtung von Kathode zu Anode;
»Rückwärtsspannung« ist die in Rückwärtsrichtung gepolte Hauptspannung, die Hauptspannung ist dann negativ;

»Sperrzustand« und »Durchlasszustand« sind die beiden stabilen Betriebszustände, die der Thyristor einnehmen kann, wenn ein Vorwärtsstrom fließt;

»Einraststrom«, »Haltestrom« und »Freiwerdezeit« sind charakteristische Kenngrößen des jeweiligen Thyristors und werden meist in seinem Datenblatt angegeben.

Ein Thyristor kann bekanntlich in den Durchlasszustand gebracht werden, was auch Zünden oder Einschalten genannt wird, indem eine Vorwärtsspannung angelegt wird und zumindest kurzzeitig, typischerweise für ungefähr 10 μs, eine positive Steuerspannung angelegt und ein Zündstrom erzeugt wird, bis der Vorwärtsstrom den Einraststrom überschreitet. Nun bleibt der Thyristor auch dann in dem Durchlasszustand, wenn der Steuerstrom erlischt oder gar umgepolt wird, allerdings nur, solange der Vorwärtsstrom den Haltestrom nicht unterschreitet und die Vorwärtsspannung anliegt. Sobald allerdings die Hauptspannung umgepolt wird, sodass aus der Vorwärtsspannung eine Rückwärtsspannung wird, oder der Vorwärtsstrom den Haltestrom unterschreitet, geht der Thyristor in den Sperrzustand über, was auch Erlöschen oder Ausschalten genannt wird. Weiterhin bedeutet im Folgenden "deaktivieren", die Gateansteuerung zu deaktivieren, um ein Zünden des Thyristors zu verhindern. Entsprechend bedeutet "aktivieren", durch Ansteuerung des Gates des Thyristors ein Zünden zu ermöglichen.

Normale Thyristoren, die auch als natürlich kommutierende Thyristoren bezeichnet werden, können bekanntlich nur auf die zuvor beschriebene Weise gelöscht werden. GTO (gate turn off) -Thyristoren können zusätzlich gelöscht werden, indem ein Löschstrom erzeugt wird. Somit erlöschen normale Thyristoren üblicherweise frühestens dann, wenn der Hauptstrom den nächsten Nulldurchgang erreicht, wohingegen GTO-Thyristoren zu jedem beliebigen Zeitpunkt gelöscht werden können. Normale Thyristoren sind derzeit beispielsweise für Ströme bis 2,2 kA und mehr und für Spannungen bis 7 kV und mehr ausgelegt, wohingegen GTO-Thyristoren derzeit nur für niedrigere Ströme und Spannungen ausgelegt werden können und teurer sind.

Nach dem Löschen benötigt der Thyristor eine bestimmte Zeitspanne, bis er wieder Spannung in Vorwärtsrichtung aufnehmen kann. Diese Zeitspanne wird als Schonzeit bezeichnet und bildet sich aus der Summe der Freiwerdezeit und einer Sicherheitsmarge.

Als Steuerung einer Kommutierungszelle wird im Folgenden allgemein verstanden, dass die Kommutierungszelle derart angesteuert wird, dass der gewünschte Schaltzustand sicher erreicht werden kann.

Weiterhin wird zwischen normaler Kommutierung und Zwangskommutierung unterschieden. Der Begriff normale Kommutierung wird verwendet, wenn der Strom durch das zuvor leitende Schaltelement einer Kommutierungszelle, direkt und innerhalb einer kurzen Zeit auf das zuvor sperrende Schaltelement kommutiert. Die physische Kommutierung in der der Strom von einem Lastzweig in den anderen kommutiert, erfolgt bei der normalen Kommutierung dabei im Zeitbereich, zu dem Laststrom und induzierte Spannung unterschiedliche Vorzeichen haben. Bei der Zwangskommutierung hingegen erfolgt die Kommutierung über einen beabsichtigten kurzzeitigen Kurzschluss. Während des sich aufbauenden und nach dem Spannungsnulldurchgang wieder abklingenden Kurzschlussstroms hat/haben das zuvor leitende Schaltelement bzw. deren Thyristoren ausreichend Zeit frei zu werden. Die Zwangskommutierung kann im Gegensatz zur normalen Kommutierung jederzeit durchgeführt werden.

Der Erfindung liegt die Aufgabe zugrunde ein Verfahren zur Steuerung eines Schaltmoduls basierend auf Halbleiterschaltelementen zu schaffen, damit die elektrische Belastung der einzelnen Halbleiterschaltelemente reduziert ist.

Diese Aufgabe wird durch ein Verfahren gelöst, das die Merkmale des Anspruchs 1 umfasst.

Vor diesem Hintergrund schlägt die Erfindung gemäß einem ersten Aspekt ein Verfahren zur Steuerung mindestens eines Schaltmoduls vor, das aus einer ersten Kommutierungszelle und einer zweiten Kommutierungszelle besteht. Die Kommutierungszellen sind jeweils über eine erste Klemme und eine zweite Klemme einer Regelwicklung eines Regeltransformators zugeordnet. Jedes Schaltmodul ist mit einer Zuleitung und einer Ableitung versehen. Die Kommutierungszellen umfassen dabei ein erstes Schaltelement und ein zweites Schaltelement, die jeweils aus zwei antiparallel geschalteten Thyristoren bestehen.

Im Rahmen des Verfahrens zur Steuerung eines Schaltmoduls werden folgende Größen ermittelt:

-   Eine Wechselspannung, die als Stufenspannung bezeichnet wird und die zwischen der ersten und der zweiten Eingangsklemme anliegt und die Spannung über der Regelwicklung des Regeltransformators darstellt;
-   Eine Wechselspannung, die als induzierte Spannung bezeichnet wird und die die induzierte Spannung in der Regelwicklung darstellt;
-   Ein Wechselstrom, der als Laststrom bezeichnet wird und der aus der Ableitung der Kommutierungszelle fließt;
-   Die Phasenverschiebung zwischen dem Laststrom und der Stufenspannung;

Im Rahmen des Verfahrens wird zur Kommutierung eines Stroms vom ersten Schaltelement auf das zweite Schaltelement gemäß einer ersten Kommutierungsstrategie nach Erhalt eines Kommutierungsbefehls eine erste Überprüfung durchgeführt. Hierbei wird geprüft ob die Phasenverschiebung zwischen dem Laststrom und der Stufenspannung außerhalb eines Grenzbereichs liegt. Das Ergebnis der ersten Überprüfung wird als positiv gewertet, wenn die Phasenverschiebung außerhalb des Grenzbereichs liegt.

Zusätzliche wird eine zweite Überprüfung durchgeführt, ob die Zeit bis zum nächsten erwarteten Nulldurchgang der Stufenspannung größer ist als eine Kommutierungszeitspanne und das Ergebnis als positiv gewertet wird, wenn dies der Fall ist. Die Kommutierungszeitspanne ist dabei die Summe aus einer Überlappungszeit und einer Schonzeit der Thyristoren. Die Überlappungszeit beschreibt die Zeit, während der Kommutierung in der beide Schaltelemente leitend sind. Die Schonzeit der Thyristoren setzt sich aus der Freiwerdezeit der Thyristoren sowie einer Sicherheitsmarge zusammen. Die Sicherheitsmarge kann dabei auch variabel sein und z. B. vom Betrag der induzierten Spannung oder dem Strom am Thyristor zu einem gewissen Zeitpunkt abhängen. Das Ergebnis der Überprüfung wird als positiv gewertet, wenn die Zeit bis zum erwarteten nächsten Nulldurchgang der Stufenspannung größer ist als die Kommutierungszeitspanne.

Sind die erste und die zweite Überprüfung positiv, wird der Kommutierungsvorgang vorbereitet, indem ein erster Thyristor, der zum ersten Schaltelement gehört und in Blockierrichtung zur induzierten Spannung liegt, deaktiviert wird. Ein zweiter Thyristor, der zum zweiten Schaltelement gehört und in Sperrrrichtung zur induzierten Spannung liegt, wird aktiviert.

Nach der Vorbereitung des Kommutierungsvorgangs wird, solange die Zeit bis zum erwarteten nächsten Nulldurchgang der Stufenspannung größer ist als die Kommutierungszeitspanne, eine dritte Überprüfung durchgeführt, ob der erste Thyristor frei geworden ist. Die Prüfung wird als positiv gewertet, wenn dies der Fall ist.

Wenn die dritte Überprüfung als positiv gewertet wird, wird eine Kommutierung eingeleitet, indem ein dritter Thyristor, der zum zweiten Thyristor antiparallel liegt, aktiviert wird und ein vierter Thyristor, der zum ersten Thyristor antiparallel liegt, deaktiviert wird.

Für den Fall, dass die erste und/oder zweite Überprüfung nicht als positiv gewertet wird/werden, wird keine Kommutierung gemäß einer ersten Kommutierungsstrategie eingeleitet. Für den Fall, dass die dritte Überprüfung nicht als positiv gewertet wird, wird die Kommutierung gemäß der ersten Kommutierungsstrategie abgebrochen.

Die Stufenspannung kann direkt, bspw. mittels eines Spannungssensors gemessen werden. Die induzierte Spannung kann direkt gemessen werden, für den Fall, dass kein Strom durch die Regelwicklung fließt. Wenn ein Strom in der Regelwicklung fließt, kann die induzierte Spannung durch Messung des Laststroms sowie der Stufenspannung modellbasiert bestimmt werden. Eine weitere Möglichkeit zur Bestimmung von Stufenspannung und induzierter Spannung ist beispielsweise die Messung von Laststrom und Stufenspannung an einer weiteren (Regel-) Wicklung des Transformators und die Anwendung bekannter modellbasierter Berechnungen der induzierten Spannung und der Stufenspannung, z.B. anhand der Admittanzmatrix des Transformators.

Ein Thyristor gilt als aktiviert, wenn dessen Gate angesteuert ist, um ein Zünden zu ermöglichen. Analog gilt ein Thyristor als deaktiviert, wenn dessen Gate nicht angesteuert ist, um ein Zünden des Thyristors zu verhindern.

Die Thyristoren können beispielsweise als normale Thyristoren oder als lichtgezündete Thyristoren ausgebildet sein.

Die Aktivierung und Deaktivierung der Thyristoren erfolgt anhand einer Steuerungseinheit. Diese Steuereinheit ist weiterhin dazu ausgebildet relevante Messgrößen wie z.B. die Stufenspannung oder den Laststrom über entsprechend dafür ausgebildete Sensoren zu erfassen. Aus den mittels der Sensoren erfassten Messgrößen bzw. Daten können weitere relevante Steuergrößen wie z.B. die induzierte Spannung oder die Phasenverschiebung zwischen Laststrom und Stufenspannung, anhand von aus dem Stand der Technik bekannten Ermittlungs- und Berechnungsverfahren bestimmt werden. Der Übersicht und Einfachheit halber wird auf die Bestimmung der Messgrößen verwendeter Sensoren nicht näher eingegangen, da es für einen Fachmann klar ist, welche Sensoren zu verwenden sind, um die relevanten Messgrößen zu bestimmen.

Die Erfindung ermöglicht den sicheren Betrieb von Stufenschaltern und anderen Vorrichtungen mit thyristorbasierten Schaltmodulen auch bei verzerrten Lastströmen, ohne dass ein unerwünschter Kurzschluss zwischen der ersten und der zweiten Klemme auftritt. Ein Kurzschluss der Regelwicklung führt, bedingt durch die geringe Impedanz der Wicklung zu hohen Kurzschlussströmen. Diese hohen Kurzschlussströme sind unerwünscht, da die Schaltelemente / Thyristoren bei optimiertem Systemdesign nicht für länger andauernde und hohe Kurzschlussströme ausgelegt sind. Häufig auftretende, hohe Kurzschlussströme führen zu einer hohen Belastung der Schaltelemente / Thyristoren, was einen negativen Einfluss auf deren Lebensdauer hat. Dies trifft vor allem dann zu, wenn häufige Schaltoperationen gefordert sind. Dementsprechend sollten Kurzschlüsse soweit möglich vermieden werden.

Weiterhin ist durch das vorgeschlagene Verfahren sichergestellt, dass zu jedem Zeitpunkt zumindest ein Thyristor jeder Kommutierungszelle in Stromrichtung leitfähig ist. Darüber hinaus wird durch das erfindungsgemäße Verfahren vorteilhaft auch eine kleinere Dimensionierung der Thyristoren ermöglicht, was zusätzliche Freiräume hinsichtlich Bauraum und Isolationsabständen schafft.

Eine Ausführungsform des vorgeschlagenen Verfahrens bestimmt, dass die Kommutierung abgebrochen wird, indem der zweite Thyristor deaktiviert wird und der erste Thyristor aktiviert wird. Hierdurch wird sichergestellt, dass das System in einen stabilen Ausgangszustand zurückkehrt.

Gemäß der Erfindung wird bei dem Verfahren bestimmt, dass nach der Vorbereitung des Kommutierungsvorgangs, solange die Zeit bis zum erwarteten nächsten Nulldurchgang der Stufenspannung größer ist als die Kommutierungszeitspanne, eine vierte Überprüfung erfolgt. Hierbei wird geprüft, ob der Betrag der Stufenspannung einen Grenzwert der Stufenspannung unterschreitet und das Ergebnis als positiv gewertet wird, wenn dies der Fall ist. Wenn das Ergebnis der dritten Überprüfung und der vierten Überprüfung als positiv gewertet werden, wird eine Kommutierung eingeleitet. Ansonsten wird die Kommutierung abgebrochen, indem der zweite Thyristor deaktiviert und der erste Thyristor aktiviert wird.

Es ist vorteilhaft die maximale Stufenspannung zum Umschaltzeitpunkt zu begrenzen um somit die Belastung der Thyristoren zu minimieren. Vorzugsweise beträgt der Grenzwert der Stufenspannung, durch den die Spannungsbelastung der Thyristoren minimiert wird 30% oder 40% oder 50% oder 60% oder 70% des Betrags des Scheitelwerts der Stufenspannung. Die Minimierung der Spannungsbelastung der Thyristoren führt dabei zu vorteilhafterer Auslegung, verlängerter Lebensdauer sowie erhöhter Zuverlässigkeit des Gesamtsystems.

Eine Ausführungsform des vorgeschlagenen Verfahrens bestimmt, dass wenn die Kommutierung gemäß der ersten Kommutierungsstrategie öfter als eine vorgegebene Anzahl abgebrochen wurde und/oder die Phasenverschiebung zwischen dem Laststrom und der Stufenspannung nicht ausreichend groß ist, eine Kommutierung gemäß einer zweiten Kommutierungsstrategie durchgeführt wird. Bei dieser zweiten Kommutierungsstrategie wird nach Erhalt des Kommutierungsbefehls ein Zündzeitpunkt bei Zwangskommutierung abgewartet. Bei Erreichen des Zündzeitpunkts bei Zwangskommutierung wird der vierte Thyristor deaktiviert und der dritte Thyristor aktiviert. Nach dem Nulldurchgang der Stufenspannung wird der erste Thyristor deaktiviert und der zweite Thyristor aktiviert.

Die Durchführung einer Zwangskommutierung kann etwa dann notwendig sein, wenn ein kritischer Betriebszustand des Regeltransformators oder einer durch den Regeltransformator versorgten Last besteht und eine unverzügliche Regelung zum sicheren Betrieb des Gesamtsystems unabdingbar ist. In diesem Fall kann durch die Steuereinheit die sofortige Zwangskommutierung eingeleitet werden.

Wird die normale Kommutierung mehrmals hintereinander abgebrochen, lässt dies darauf schließen, dass die äußeren Systembedingungen wie z.B. Phasenverschiebung, Verzerrungen von Strömen und Spannungen, eine normale Kommutierung nicht zulassen und eine rasche Änderung der Systembedingungen nicht zu erwarten ist. In diesem Fall kann die Steuerungseinheit ebenfalls eine Zwangskommutierung einleiten.

Zur Bewertung kritischer Betriebszustände des Regeltransformators oder der versorgten Last können in der Steuerungseinheit weitere Parameter und Grenzwerte, beispielsweise zu relevanten Systemgrößen, hinterlegt werden.

Vorzugsweise wird für die vorgegebene Anzahl der abgebrochenen Kommutierungsstrategien beispielsweise der Wert 3, oder 5, oder 7, oder 10 gewählt.

Eine bevorzugte Ausführungsform des vorgeschlagenen Verfahrens bestimmt, dass der Zündzeitpunkt bei Zwangskommutierung gemäß einer Funktion der Schonzeit der Thyristoren sowie der maximalen Strombelastung, die aus der zweiten Kommutierungsstrategie resultiert, ermittelt wird. Die Schonzeit der Thyristoren setzt sich dabei aus der Freiwerdezeit der Thyristoren sowie einer Sicherheitsmarge zusammen. Die Sicherheitsmarge kann dabei auch variabel sein und z. B. vom Betrag der Spannung oder dem Strom am Thyristor zu einem gewissen Zeitpunkt abhängen.

Eine bevorzugte Ausführungsform des vorgeschlagenen Verfahrens bestimmt, dass die Kommutierungszeitspanne der Summe aus der Überlappungszeit und der Schonzeit der Thyristoren entspricht.

Eine bevorzugte Ausführungsform des vorgeschlagenen Verfahrens bestimmt, dass die Überlappungszeit vom Zündwinkel $\alpha$ und dem Laststrom abhängt und die Zeit beschreibt in der beide Schaltelemente einer Kommutierungszelle während eines Kommutierungsvorgangs leitfähig sind.

Eine bevorzugte Ausführungsform des vorgeschlagenen Verfahrens bestimmt, dass für den Grenzbereich der Phasenverschiebung $\varphi$ zwischen Laststrom und Stufenspannung gilt:

$$\varphi cap < \varphi \leq 0 \text{ mit } \varphi cap < 0$$

worin $\varphi cap$ einen negativen kapazitiven Grenzwert darstellt.

Der negative kapazitive Grenzwert kann beispielsweise -5°, oder -7,5°, oder -10°, oder -12,5°, oder -15°, oder -40° betragen.

Die Erfindung schlägt gemäß einem zweiten Aspekt ein Computerprogrammprodukt vor, wobei das Computerprogrammprodukt auf einem nicht-flüchtigen und computerlesbaren Medium bereitgestellt ist und eine Steuerungseinheit veranlasst ein Verfahren nach gemäß des ersten erfindungsgemäßen Aspekts auszuführen.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen oder mit einzelnen Merkmalen anderer Ausführungsformen verbunden oder kombiniert werden. Die Einzelheiten in den Zeichnungen sind nur erläuternd, nicht aber beschränkend auszulegen. Die in den Ansprüchen enthaltenen Bezugzeichen sollen den Schutzbereich der Erfindung in keiner Weise beschränken, sondern verweisen lediglich auf die in den Zeichnungen Merkmale und tragen zum Verständnis der Erfindung bei.

Die Zeichnungen zeigen in

FIG. 1    eine schematische Darstellung eines Regeltransformators mit leistungselektronischen Schaltmodulen;

FIG. 2a    den Aufbau eines leistungselektronischen Schaltmoduls inklusive Regelwicklung;

FIG. 2b    das elektrische Ersatzschaltbild inklusive elektrischer Größen des betrachteten Schaltmoduls;

0    den schematischen Aufbau einer Kommutierungszelle;

FIG. 4    ein Ablaufdiagram des vorgeschlagenen Verfahrens zur Kommutierungssteuerung;

FIG. 5a    den zeitlichen Verlauf von Strom und Spannung in der Kommutierungszelle der FIG. 3 inkl. der zur Durchführung des Verfahrens relevanten Zeitpunkte t0 - t5 bei normaler Kommutierung gemäß dem Verfahren aus Fig. 4;

FIG. 5b    Zustände der Thyristoren sowie die Zustände der Kommutierungszelle bei normaler Kommutierung gemäß dem Verfahren aus FIG. 4;

FIG. 6    Zustände der Thyristoren sowie die Zustände der Kommutierungszelle bei Zwangskommutierung gemäß dem Verfahren aus FIG. 4;

FIG. 7    den Zündzeitpunkt t (in Grad) zu dem eine Zwangskommutierung eingeleitet wird in Abhängigkeit der Schonzeit der Thyristoren sowie maximalem Laststrom und Scheitelwert des Kurzschlussstroms $\hat{I}SC$; und

FIG 8.    Bereiche in denen eine normale Kommutierung im induktiven sowie kapazitiven Lastfall möglich ist.

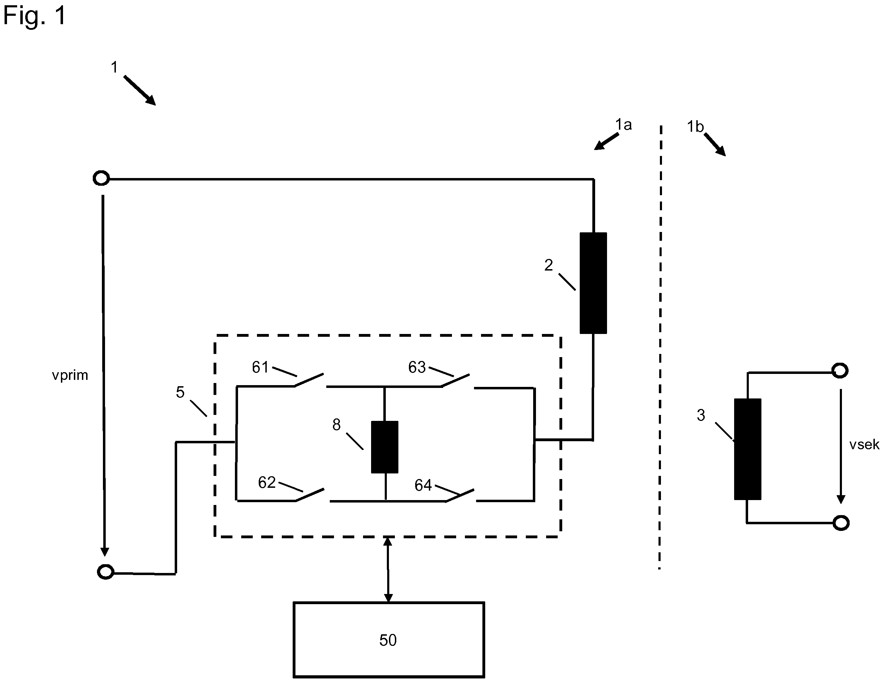

Figur. 1 zeigt den schematischen Aufbau eines Regeltransformators 1. Der Regeltransformator 1 besteht aus einer regelbaren Primärseite 1a und einer Sekundärseite 1b. Die Primärseite 1a umfasst eine Stammwicklung 2 sowie ein Schaltmodul 5. Die Sekundärseite 1b umfasst die Sekundärwicklung 3. Das Schaltmodul 5 umfasst eine Regelwicklung 8 sowie die Schaltelemente 61, 62, 63, 64. Die Ausgangsspannung vsek, die über der Sekundärwicklung 3 abfällt, ist abhängig von der Eingangsspannung vprim über der Primärseite des Regeltransformators 1 sowie dem Übersetzungsverhältnis des Regeltransformators 1. Das Übersetzungsverhältnis des Regeltransformators 1, und somit die Ausgangsspannung vsek, kann über die Verschaltung der Stammwicklung 2 mit der Regelwicklung 8 beeinflusst werden. Zur Verschaltung der Regelwicklung 8 mit der Stammwicklung 2 ergeben sich mittels der Schaltelemente 61, 62, 63, 64 drei mögliche Konfigurationen. In einer ersten Konfiguration kann die Regelwicklung 8 in Reihe mit der Stammwicklung 2 geschalten werden. In einer zweiten Konfiguration kann die Regelwicklung 8 gegen die Stammwicklung 2 geschalten werden. In einer dritten Konfiguration kann die Regelwicklung 8 aus dem Kreis heraus geschalten werden. Die Regelwicklung 8 wird in diesem Fall von keinem Strom durchflossen. Die Steuerung der Kommutierungszelle 9a, 9b erfolgt über eine Steuerungseinheit 50. Bei Bedarf können auch mehrere Schaltelemente 5 in Reihe geschaltet werden. Weiterhin ist auch eine Regelung auf der Sekundärseite 3 des Regeltransformators 1 mittels eines oder mehrerer Schaltmodule 5 möglich.

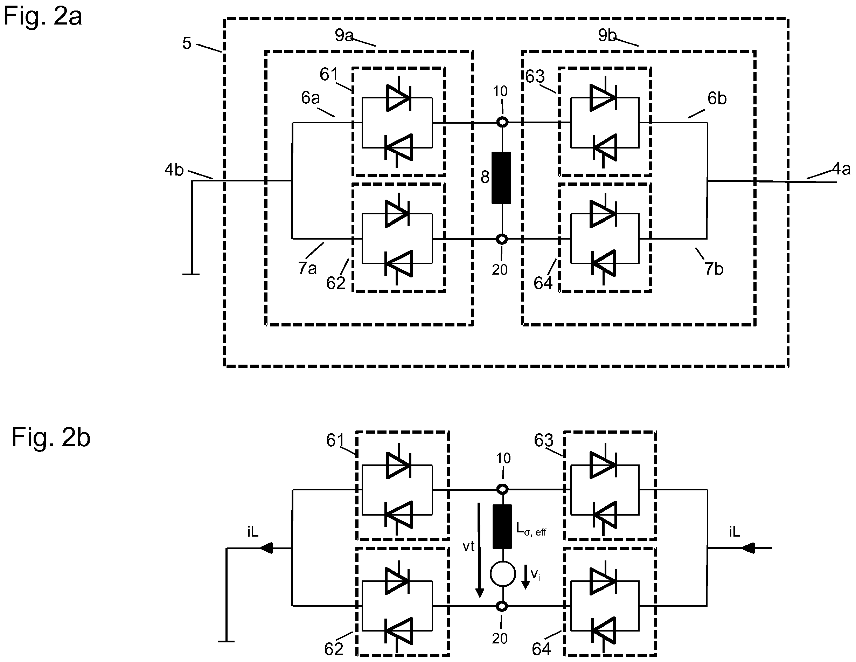

Figur 2a zeigt den schematischen Aufbau des Schaltmoduls 5. Das Schaltmodul 5 umfasst zwei Kommutierungszellen 9a, 9b, sowie die Regelwicklung 8. Jede Kommutierungszelle 9a, 9b verfügt über einen ersten Lastzweig 6a, 6b sowie parallel dazu angeordnet einen zweiten Lastzweig 7a, 7b. Die Regelwicklung 8 ist zwischen einer ersten Klemme 10 und einer zweiten Klemme 20 angeordnet. Das Schaltmodul 5 umfasst zudem eine Zuleitung 4a in das Schaltmodul und eine Ableitung 4b aus dem Schaltmodul 5.

Fig. 2b zeigt die elektrischen Größen, die im Folgenden zur Erklärung des Verfahrens zur Kommutierungssteuerung genutzt werden. Der Laststrom iL (sinusförmiger Wechselstrom) beschreibt den Laststrom, der in der Zuleitung 4a von der Stammwicklung 2 in das Schaltmodul 5 hinein und in der Ableitung 4b aus dem Schaltmodul 5 hinaus fließt. Der Laststrom iL wird als positiv definiert, wenn er, wie in Figur 2b gezeigt, in der Ableitung 4b aus dem Schaltmodul 5 hinaus fließt. Die Stufenspannung vt (sinusförmige Stufenspannung), fällt über der Regelwicklung 8 ab und liegt zwischen den Klemmen 10 und 20 an. Die Stufenspannung vt wird als positiv definiert, wenn der Spannungsabfall von der Klemme 10 in Richtung der Klemme 20 erfolgt. Die Regelwicklung 8 ist im Ersatzschaltbild als sinusförmige Spannungsquelle in Reihe mit einer Streuinduktivität $L_{\sigma, \text{eff}}$ des Regeltransformators 1 modelliert. Die induzierte Spannung vi stellt dabei die induzierte Spannung der Regelwicklung 8 dar und $L_{\sigma, \text{eff}}$ die effektive Streuinduktivität des Regeltransformators 1 während des Kommutierungsvorgangs.

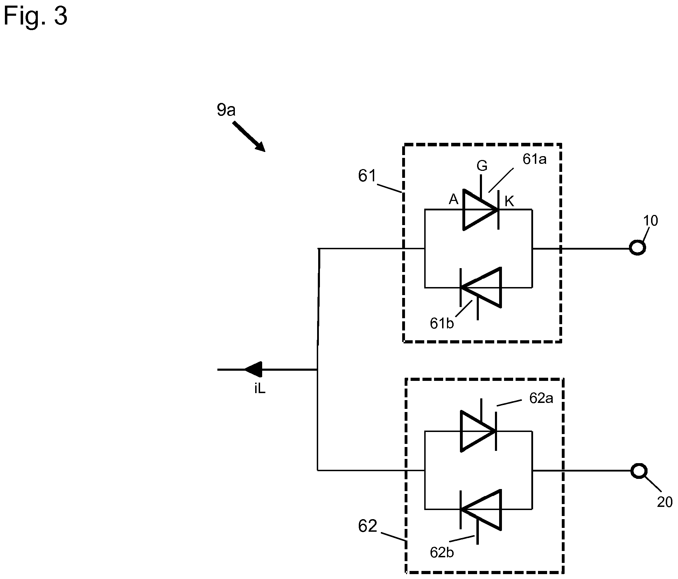

Figur 3 zeigt den schematischen Aufbau einer Kommutierungszelle 9a. Zwischen der ersten Klemme 10 und der Ableitung 4 ist ein oberes Schaltelement 61, zwischen der zweiten Klemme 20 und der Ableitung 4 ist ein unteres Schaltelement 62 angeordnet. Jedes Schaltelement 61, 62 besteht aus einem oberen Thyristor 61a, 62a und einem unteren Thyristor 61b, 62b, die antiparallel miteinander verschaltet sind. Jeder Thyristor 61a, 61b, 62a, 62b besitzt einen Anodenanschluss A, einen Kathodenanschluss K, und einen Gate-Anschluss G. Jedes Schaltelement 61, 62 kann zwei Schaltzustände einnehmen, einen leitenden Zustand oder einen sperrenden Zustand. Im Normalzustand fließt der Laststrom iL je nach Schaltzustand der Schaltelemente 61, 62 entweder durch das obere Schaltelement 61 im ersten Lastzweig 6a oder das untere Schaltelement 62 im zweiten Lastzweig 7a. Während eines Kommutierungsvorgangs fließt kurzfristig ein Strom durch beide Schaltelemente 61, 62 in den Lastzweigen 6a und 7a.

Im Folgenden wird das vorgeschlagene Verfahren zur Kommutierung eines Stroms in einer Kommutierungszelle 9a gemäß Figur 3 mit dem Ziel der Änderung des Übersetzungsverhältnisses des Regeltransformators 1 näher beschrieben. Beispielhaft wird das Verfahren dabei anhand einer Kommutierung des Laststroms iL vom oberen, in diesem Fall ersten, Schaltelement 61 in das untere, in diesem Fall zweite, Schaltelement 62 beschrieben. Vor dem Kommutierungsvorgang sind die beiden antiparallelen Thyristoren 61a, 61b des ersten Schaltelements 61 dementsprechend aktiviert und das erste Schaltelement 61 ist leitend. Weiterhin sind die beiden antiparallelen Thyristoren 62a, 62b des zweiten Schaltelements 62 deaktiviert und das zweite Schaltelement 62 ist sperrend. Die folgenden Ausführungen gelten für eine Kommutierung des Laststroms iL vom ersten Schaltelement 61 in das zweite Schaltelement 62 in der negativen Halbwelle der Stufenspannung vt. Für die angrenzende Kommutierungszelle 9b gilt, dass das untere Schaltelement 64 leitend geschaltet, das obere Schaltelement 63 sperrend geschaltet ist. Weiterhin herrscht im Folgenden ein kapazitiver Lastfall vor, in dem der Laststrom iL der Stufenspannung vt vorauseilt. Relevante Einschränkungen bzw. Abwandlungen für den induktiven Lastfall, in dem der Laststrom iL der Stufenspannung vt nacheilt, werden im Folgenden an geeigneter Stelle beschrieben.

Weitere mögliche Kommutierungsfälle lassen sich analog anhand folgender Regeln abbilden.

- Kommutierung vom zweiten Schaltelement 62 in das erste Schaltelement 61 durch Tauschen des Thyristors 61a mit dem Thyristor 62a, Tausch von Thyristor 61b mit dem Thyristor 62b, sowie Invertierung der induzierten Spannung vi;

- Kommutierung in der positiven Halbwelle der Stufenspannung vt durch Tauschen des Thyristors 61a mit dem Thyristor 61b, Tausch von Thyristor 62a mit dem Thyristor 62b sowie Invertieren des Laststroms iL und der induzierten Spannung vi;

- Betrachtung des Falles, dass die angrenzende Kommutierungszelle 63 leitet und die Kommutierungszelle 64 sperrt, indem die induzierte Spannung um den Anteil $L_{a,} L_{\sigma, \text{eff}} \frac{diL}{dt}$ erhöht wird;

- Bei gleichzeitiger Kommutierung in beiden Schaltzellen 9a, 9b gilt aufgrund des symmetrischen Aufbaus der beiden Kommutierungszellen 9a, 9b:

    Thyristor 63a $\hat{=}$ Thyristor 62a;
    Thyristor 63b $\hat{=}$ Thyristor 62b;
    Thyristor 64a $\hat{=}$ Thyristor 61a; und
    Thyristor 64b $\hat{=}$ Thyristor 61b;

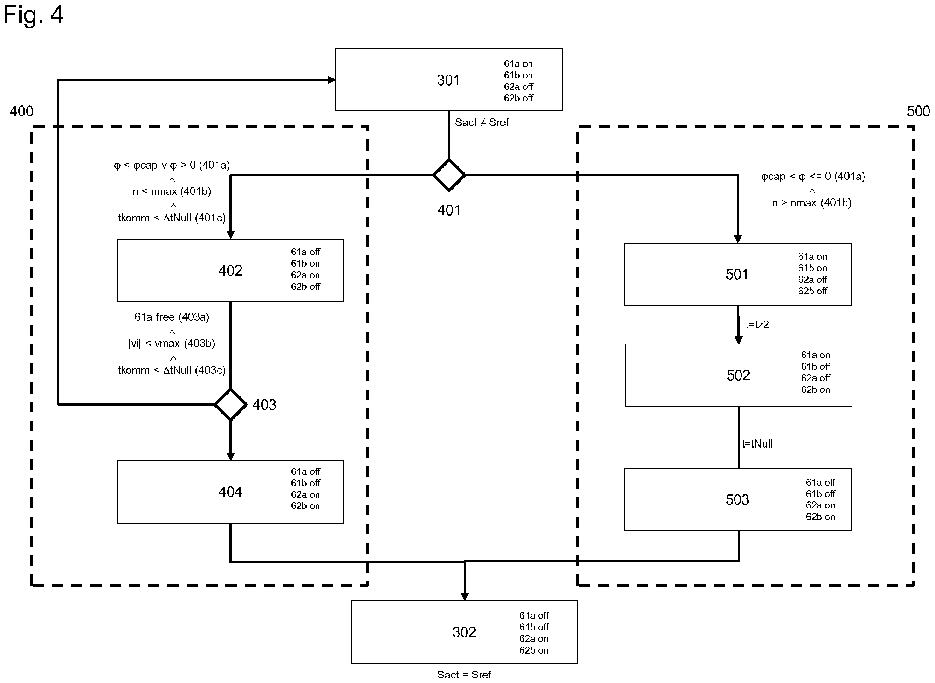

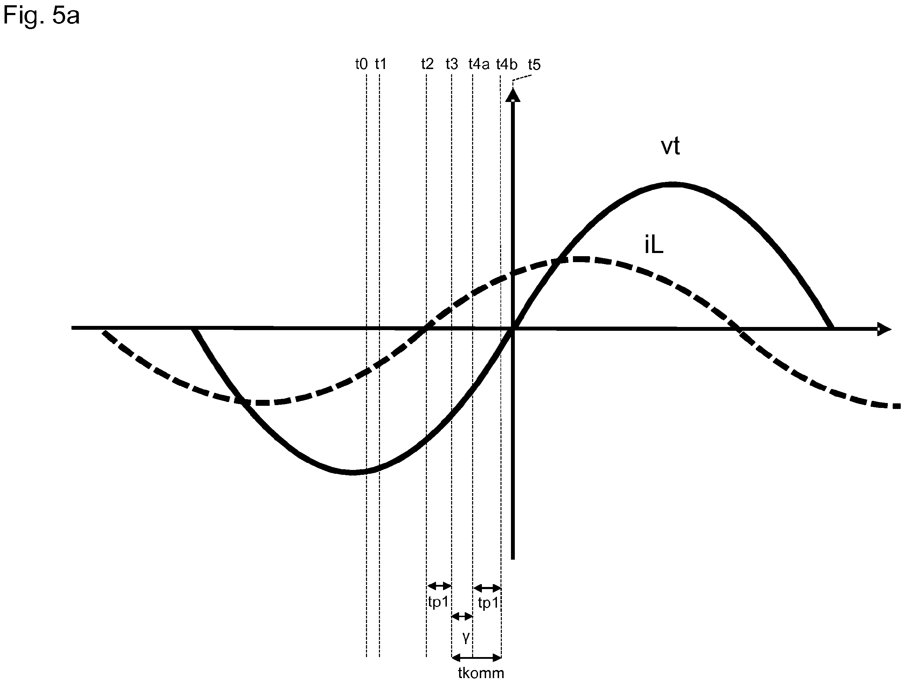

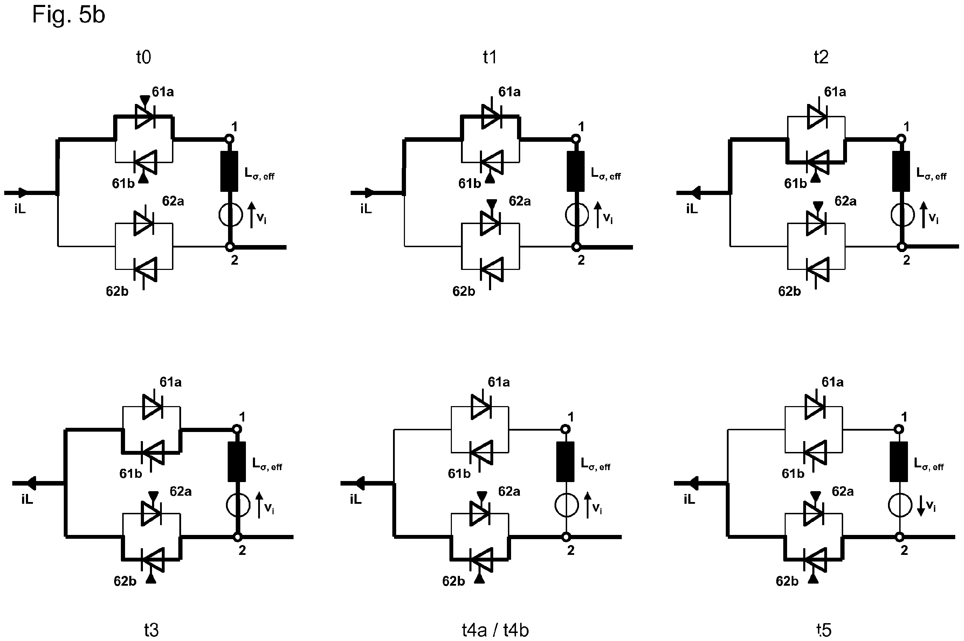

Figur 4 zeigt den allgemeinen Ablauf des Verfahrens. Der zeitliche Ablauf des Kommutierungsvorgangs inkl. der Verläufe der Stufenspannung vt und des Laststroms iL ist in Figur 5a dargestellt. Der Zustand der Thyristoren sowie die Zustände der Kommutierungszelle für die Phasen des Kommutierungsvorgangs sind in Figur 5b dargestellt.

Im Ausgangszustand 301 sind die Thyristoren 61a und 61b aktiviert, das erste Schaltelement 61 ist somit leitend. Die Thyristoren 62a und 62b sind deaktiviert, das zweite Schaltelement 62 ist somit sperrend. Der Laststrom iL sowie die induzierte Spannung vi besitzen beide ein negatives Vorzeichen, der Laststrom iL fließt durch den Thyristor 61a.

Zum Zeitpunkt t=t0 (siehe Figur 5a) erfolgt anhand der Steuerungseinheit 50 eine Kommutierungsanforderung zur Kommutierung des Laststroms iL vom ersten Lastzweig 6a in den zweiten Lastzweig 7a. Der aktuelle Status Sact der Thyristoren 61a, 61b, 62a, 62b entspricht somit nicht mehr dem gewünschten Status Sref. Der Zeitpunkt t0 zu dem die Kommutierungsanforderung erfolgt, kann dabei ein beliebiger Zeitpunkt in der negativen Halbwelle der Stufenspannung vt sein. Gemäß dem Verfahren wird nun versucht eine Kommutierung gemäß einer ersten Kommutierungsstrategie 400, im Weiteren auch als normale Kommutierung bezeichnet, durchzuführen.

Hierzu wird zunächst in einer Prüfung 401 geprüft, ob die Grundvoraussetzungen für einen normalen Kommutierungsvorgang erfüllt sind. Voraussetzungen für einen normalen Kommutierungsvorgang sind:

- eine ausreichend große Phasenverschiebung φ zwischen Laststrom iL und Stufenspannung vt;
- ein ausreichender Abstand zum nächsten Nulldurchgang der Stufenspannung vt;
- die normale Kommutierung wurde nicht bereits mehrfach (nmax) abgebrochen;

Eine ausreichend große Phasenverschiebung für eine Kommutierung liegt vor, wenn der Phasenwinkel kleiner ist als ein negativer kapazitiver Grenzwert φcap. Diese Bedingung ist notwendig um ein sicheres Freiwerden und einen sicheren Aufbau der Sperrfähigkeit des Thyristors 61b im weiteren Verlauf der Kommutierung zu gewährleisten. Der Grenzwert φcap lässt sich wie folgt bestimmen:

Zunächst wird der minimale Zündwinkel, zu dem eine normale Kommutierung möglich ist, herangezogen. Dieser errechnet sich für den kapazitiven Fall aus:

$$\alpha min = \varphi + \delta 61a - \omega \cdot \gamma(iL, \alpha min) \quad (1)$$

wobei gilt

| | |
|---|---|
| amin: | minimaler Zündwinkel in rad |
| $\delta 61a$: | Schonzeit des Thyristors 61a in rad |
| $\gamma$: | Überlappungszeit abhängig vom Zündwinkel $\alpha$ und dem Laststrom iL, der die Zeit während der Kommutierung in dem beide Schaltelemente 61,62 leitend sind, beschreibt |
| $\omega$: | Frequenz der induzierten Spannung vi in rad/s |
| $\varphi$: | Phasenverschiebung zwischen Laststrom iL und Stufenspannung vt |

Die Überlappungszeit $\gamma$ berechnet sich dabei unter Verwendung des Ersatzschaltbildes nach Figur 2b wie folgt:

$$\gamma = (- acos(iL \cdot \omega \cdot L_{\sigma, eff} / Vs + cos \alpha) - \alpha) / \omega$$

wobei gilt:

| | |
|---|---|
| Vs: | Scheitelwert der induzierten Spannung vi |

Der maximale Zündwinkel zu dem eine normale Kommutierung möglich ist, ist beschränkt durch:

$$\alpha max + \omega \cdot \gamma(iL, \alpha max) = -\delta 61b \quad (2)$$

wobei gilt:

| | |
|---|---|
| amax: | maximaler Zündwinkel in rad |
| $\delta 61b$: | Schonzeit des Thyristors 61b in rad |

Die maximale Phasenverschiebung, für die eine normale Kommutierung möglich ist, ergibt sich somit durch Gleichsetzen von (1) und (2). Unter der Annahme, dass die Schonzeiten des Thyristors 61a und des Thyristors 61b gleich sind, ergibt sich somit für den Grenzwert φcap:

$$\varphi cap = -2 \cdot \delta \quad (3)$$

Wobei gilt:

| | |
|---|---|
| $\varphi$cap: | negativer kapazitiver Grenzwert der Phasenverschiebung $\varphi$ |
| $\delta$: | Schonzeit der Thyristoren in rad |

Im Fall einer induktiven Belastungssituation gilt die Bedingung:

$$\varphi > 0$$

Ein ausreichender Abstand zum nächsten erwarteten Nulldurchgang der Stufenspannung vt ist vorhanden, wenn die Zeit bis zum nächsten erwarteten Nulldurchgang der Stufenspannung vt größer ist als eine Kommutierungszeitspanne tkomm. tkomm stellt dabei die Summe aus der Überlappungszeit γ und der Schonzeit tp1dar. Unter der Annahme, dass alle Thyristoren über gleiche Schonzeiten verfügen, gilt:

$$tkomm = \gamma + tp1$$

wobei gilt:

tkomm:     Kommutierungszeitspanne
tp1:          Schonzeit der Thyristoren in Sekunden

Um einen ausreichenden Abstand zum nächsten Nulldurchgang der Stufenspannung vt zu gewährleisten, muss also nachstehende Bedingung erfüllt sein.

$$tkomm < \Delta tNull$$

wobei gilt:

ΔtNull:     Zeit bis zum nächsten erwarteten Nulldurchgang der Spannung vt

Wie nachfolgend beschrieben, wird die Kommutierung abgebrochen, wenn die entsprechenden Bedingungen für eine sichere normale Kommutierung nicht erfüllt werden. Wird die normale Kommutierung mehrmals hintereinander abgebrochen, lässt dies darauf schließen, dass die äußeren Systembedingungen wie z.B. Phasenverschiebung, oder die Verzerrung von Laststrom iL und Stufenspannung vt, eine normale Kommutierung nicht zulassen. Um diesen Fall frühzeitig zu erkennen, wird vor Einleitung des normalen Kommutierungsvorgangs geprüft, ob eine Kommutierung bereits mehrfach abgebrochen wurde. Mehrfach kann in diesem Zusammenhang z.B. dreimal, fünfmal oder siebenmal bedeuten.
Sind die oben genannten Bedingungen erfüllt, wird die Prüfung 401 als positiv gewertet und ein normaler Kommutierungsvorgang durchgeführt. Hierzu wird im Schritt 402 die normale Kommutierung vorbereitet, indem zum Zeitpunkt t1 in Figur 5a der Thyristor 61a deaktiviert wird und der Thyristor 62a aktiviert wird. Die Aktivierung des Thyristors 62a ist notwendig, um im Fall einer unerwarteten Änderung der Richtung des Laststroms iL einen Lastpfad zur Verfügung zu stellen. Die entsprechende Konfiguration der Kommutierungszelle zum Zeitpunkt t1 ist aus Figur 5b zu entnehmen.
Nach der Vorbereitung der Kommutierung gemäß Schritt 402 erfolgt zur Sicherstellung einer fehlerfreien Durchführung der Kommutierung in Schritt 403 eine weitere Prüfung. Dabei wird geprüft, ob die Bedingungen zur Einleitung einer Kommutierung erfüllt sind. Diese Bedingungen sind wie folgt:

- der vorher deaktivierte Thyristor 61a ist frei geworden;

- es besteht ein ausreichender Abstand zum nächsten Nulldurchgang der Stufenspannung vt; und

- der Betrag der induzierten Spannung vi liegt bei Einleitung der Kommutierung unter einem Grenzwert der Stufenspannung vmax;

Der Thyristor 61a darf um frei zu werden, bei deaktivierter Gate-Ansteuerung über einen gewissen Zeitraum tp1 (Schonzeit) keinen Strom führen. Die Schonzeit tp1 setzt sich aus der Freiwerdezeit des Thyristors sowie einer Sicherheitsmarge zusammen. Die Sicherheitsmarge kann dabei auch variabel sein. Im vorliegenden Kommutierungsfall führt Thyristor 61a erst nach der Änderung des Vorzeichens des Laststroms iL keinen Strom mehr. Dies ist zum Zeitpunkt t2 der Fall, in dem sich das Vorzeichen des Laststroms iL von negativ auf positiv ändert und der Thyristor 61b den Laststrom iL im oberen Lastzweig übernimmt.
Nun wird gemäß der normalen Kommutierungsstrategie überwacht, dass für die Dauer der Schonzeit tp1 des Thyristors 61a kein Strom durch diesen Thyristor 61a fließt. Dies erfolgt z.B. durch Beobachtung der Richtung des Laststroms iL oder durch Messung des Stroms direkt am Thyristor 61a. Sobald für die Dauer der Schonzeit tp1 des Thyristors 61a kein Strom durch diesen Thyristor 61a geflossen ist, ist sichergestellt, dass dieser Thyristor 61a frei geworden ist und ein ungewolltes Wieder- oder Rückzünden des Thyristors 61a bei der Kommutierung vom oberen in den unteren 6a, 6b Lastzweig vermieden wird.

Weiterhin erfolgt wie bereits in Schritt 401 auch vor der Einleitung der Kommutierung die Überprüfung, ob ein ausreichender Abstand zum nächsten erwarteten Spannungsnulldurchgang vorhanden ist gemäß der Bedingung:

$$tkomm < \Delta tNull$$

Neben den beiden obigen Überprüfungen wird vorzugsweise auch der Betrag der Stufenspannung vt überwacht. Der Betrag der Stufenspannung vt bei Einleitung der Kommutierung ist ein maßgebender Faktor für die Beanspruchung der Thyristoren. Insofern wird der Betrag der Stufenspannung, der bei der Kommutierung auftritt und durch die Thyristoren gehalten werden muss, vorzugsweise auf einen vorbestimmten Wert begrenzt, um die Lebensdauer sowie Zuverlässigkeit der Thyristoren zu erhöhen und somit die Kosten des Gesamtsystems zu reduzieren. Als maximale Stufenspannung, bei der eine Kommutierung eingeleitet werden kann, wird vorzugsweise 50% der Nennspannung vt gewählt.

Sind alle drei oben genannten Bedingungen erfüllt, wird zum Zeitpunkt t3 in einem Schritt 404 die Kommutierung vom oberen Lastzweig 6a in den unteren Lastzweig 6b eingeleitet, indem der Thyristor 61b deaktiviert und der Thyristor 62b aktiviert werden. Sobald der Thyristor 62b aktiviert wird, nimmt der Strom durch den Thyristor 61b ab, bis der gesamte Laststrom iL durch den Thyristor 62b fließt. Dies ist nach Ablauf der Überlappungszeit γ zum Zeitpunkt t4a der Fall (siehe auch Figur 5b, Zeitpunkt t4a / t4b). Nach dem Zeitpunkt t4a besteht für Thyristor 61b vor dem nächsten erwarteten Nulldurchgang der Stufenspannung vt noch ausreichend Zeit (mindestens die Schonzeit tp1) um frei zu werden. Mit Ablauf der Schonzeit tp1 zum Zeitpunkt t4b hat Thyristor 61b dementsprechend seine volle Sperrfähigkeit erreicht. Somit ist einem erneuten, ungewollten Zünden des Thyristors 61b beim nachfolgenden Nulldurchgang der Stufenspannung vt vorgebeugt. Zum Zeitpunkt t5 ändert auch die Stufenspannung vt ihr Vorzeichen, der Laststrom iL fließt weiterhin im unteren Lastzweig 6b. Die Kommutierung ist somit beendet und der Endzustand 302 erreicht, in dem der aktuelle Status Sact der Thyristoren 61a, 61b, 62a, 62b dem durch die Steuerung vorgegebenen Status Sref entspricht.

Werden im Rahmen der Überprüfung (Schritt 403) nicht alle Bedingungen erfüllt, wird die Kommutierung abgebrochen. Dazu wird Thyristor 61a aktiviert und Thyristor 62a deaktiviert. Somit befindet sich das System nach dem Abbruch einer Kommutierung wieder in seinem Ausgangszustand 301.

Für den Fall, dass die Bedingungen der Prüfung 401 nicht erfüllt werden und/oder ein Kommutierungsvorgang bereits mehrfach abgebrochen wurde (Anzahl der Abbrüche n größer als eine vorgegebene Anzahl nmax), jedoch trotzdem eine Kommutierung vom oberen auf den unteren Lastzweig durchgeführt werden soll, kann ein alternatives Kommutierungsverfahren 500, das im Folgenden auch als Zwangskommutierung 500 bezeichnet wird, durchgeführt werden. Die Notwendigkeit einer Zwangskommutierung 500 kann etwa dann bestehen, wenn ein kritischer Betriebszustand des Regeltransformators 1 oder der durch den Regeltransformator 1 versorgten Last besteht und eine unverzügliche Regelung zum sicheren Betrieb des Gesamtsystems unabdingbar ist. Für die Zwangskommutierung 500 wird nach Erhalt des Kommutierungsbefehls zur Kommutierung des Laststroms iL vom oberen in das untere Schaltelement in einem Schritt 501 abgewartet, bis die notwendigen Voraussetzungen für die Zwangskommutierung zutreffen. Notwendige Bedingungen für die Zwangskommutierung sind:

- ausreichend großer Abstand vom Nulldurchgang der Stufenspannung vt, so dass für Thyristor 61b ausreichend Zeit zum Freiwerden zur Verfügung steht; und

- ausreichend kleiner Abstand vom Nulldurchgang der Stufenspannung vt um unnötig hohe Stromstärken während des Kommutierungsvorgangs zu vermeiden;

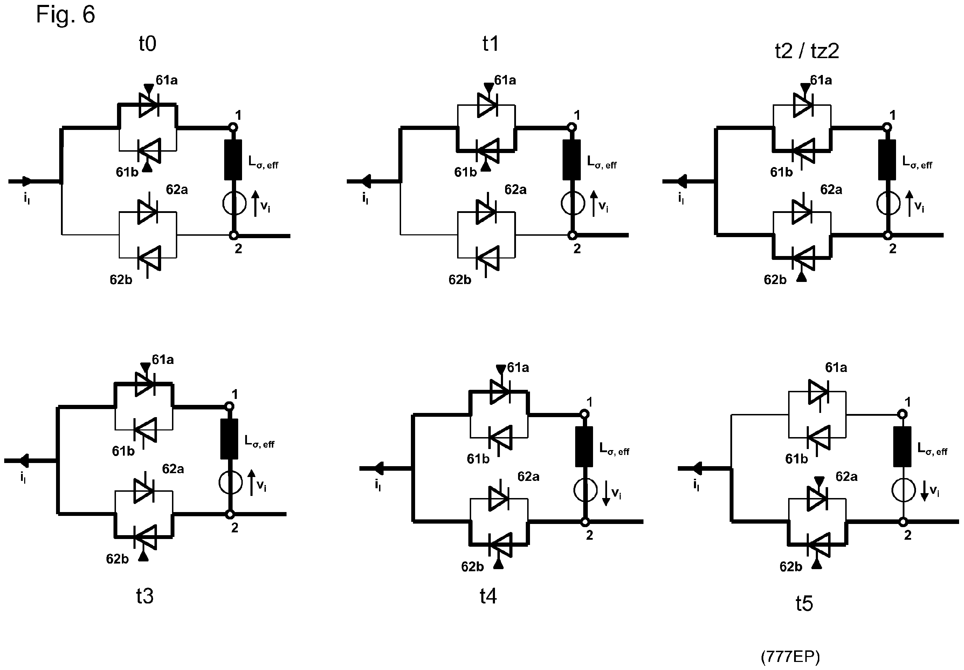

Sobald diese Bedingungen zutreffen wird gemäß dem alternativen Kommutierungsverfahren eine erzwungene Kommutierung durchgeführt. Die Zustände der Thyristoren sowie der Schaltelemente 61,62 in den einzelnen Schritten der Zwangskommutierung sind in Figur 6 abgebildet.

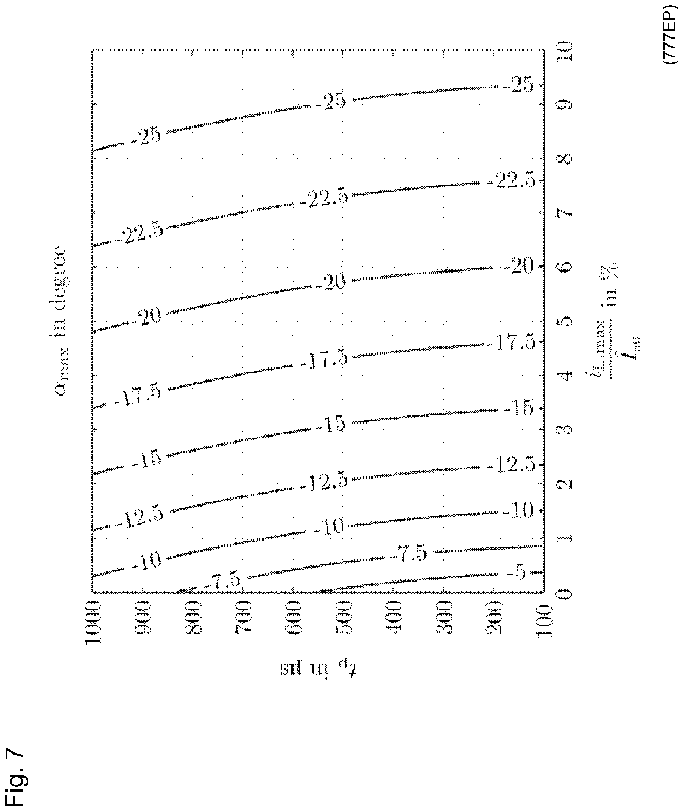

Zum Zeitpunkt t0 befindet sich die Stufenspannung vt in Ihrer negativen Halbwelle, der Laststrom iL ist ebenfalls negativ, das obere Schaltelement 61 ist leitend, das untere Schaltelement 62 ist sperrend, der Thyristor 61a führt den Laststrom iL. In Schritt 501 wird zunächst der Zeitpunkt tz2 zur Einleitung der Zwangskommutierung 500 abgewartet, zu dem die notwendigen Bedingungen zur Zwangskommutierung 500 erfüllt sind. Der optimale Zeitpunkt tz2 als Funktion der Schonzeit tp1 sowie der maximalen Strombelastung, lässt sich beispielsweise aus Figur. 7 entnehmen. iL,max entspricht dabei dem theoretisch möglichen maximalen Betrag des Laststroms iL, ÎSC stellt den Scheitelwert des Kurzschlussstroms, der sich nach Aktivierung von Thyristor 62b in der Kommutierungszelle aufbaut, dar. Gemäß Figur. 6 erfolgt zunächst der Vorzeichenwechsel des Laststroms iL, so dass Thyristor 61b zum Zeitpunkt t1, nach erfolgtem Richtungswechsel des Laststroms iL, den Laststrom iL leitet.

Sobald der optimale Zündzeitpunkt tz2 erreicht ist, erfolgt In einem Schritt 502 die Einleitung der Zwangskommutierung, indem der Thyristor 61b deaktiviert und Thyristor 62b aktiviert wird. Durch die Aktivierung des Thyristors 62b wird ein kurzzeitiger Kurzschluss der Klemmen 10 und 20 erzeugt, so dass sich zum Zeitpunkt t3, der unmittelbar nach dem Zündzeitpunkt tz2 liegt, ein kurzzeitiger Kurzschlussstrom durch die Thyristoren 61a und 62b aufbaut (vgl. Fig.6, t3). Nach dem Nulldurchgang der induzierten Spannung vi zum Zeitpunkt t4 baut sich der Kurzschlussstrom wieder ab. Dies ist in Figur 4 mit dem Zeitpunkt t= tNull gekennzeichnet. Für den Thyristor 61b besteht währenddessen ausreichend Zeit, um seine Bedingungen für ein Freiwerden zu erfüllen. Zum Zeitpunkt t5 ist die Zwangskommutierung abgeschlossen, der Thyristor 61a wird deaktiviert und der Thyristor 62a aktiviert (Schritt 503 in Fig. 4). Das System befindet sich nun im gewünschten Zustand 302, in dem der aktuelle Status Sact der Thyristoren 61a, 61b, 62a, 62b dem durch die Steuerung vorgegebenen Status Sref entspricht.

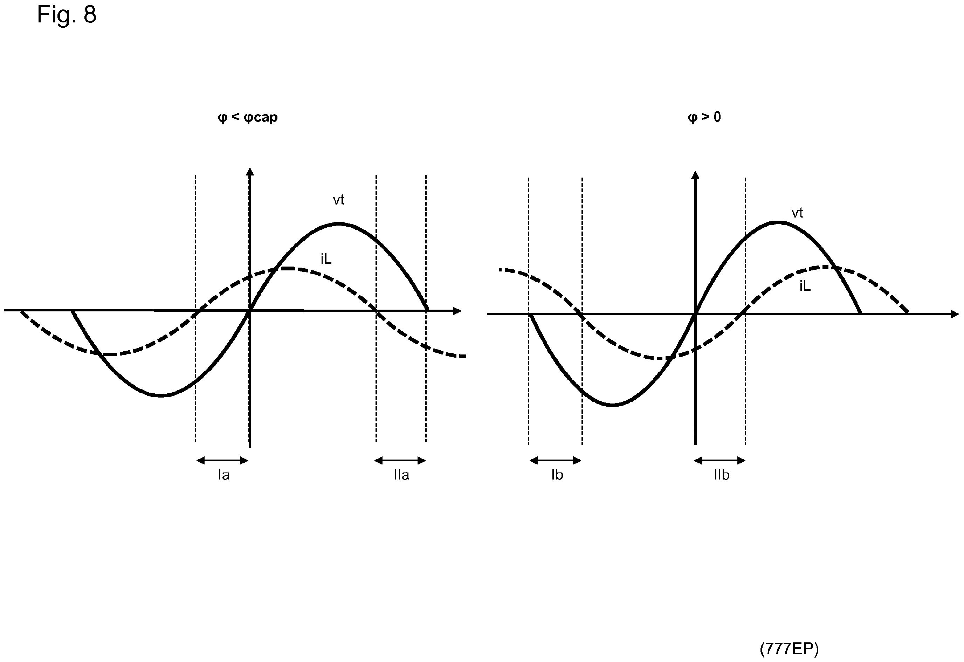

Die Bedingungen und Abläufe für die normale Kommutierung bei induktive Belastungssituation, d.h. der Laststrom iL eilt der Stufenspannung vt nach, lassen sich aus dem oben beschriebenem kapazitiven Lastfall einfach ableiten. Hierzu sei auf Figur 8 verwiesen, in der links der kapazitive Lastfall und rechts der induktive Lastfall abgebildet sind. Der eigentliche, physische Kommutierungsvorgang erfolgt, wie erläutert nur in Bereichen möglich, in denen Laststrom iL und Stufenspannung vt über unterschiedliche Vorzeichen verfügen. Diese Bereiche sind in Figur 8 mit Ia, Ib, IIa und IIb gekennzeichnet. Der Bereich Ia im kapazitiven Fall in dem die Stufenspannung vt negativ ist und der Laststrom IL positiv ist korrespondiert dabei mit dem Bereich Ib im induktiven Belastungsfall. Analog hierzu korrespondieren die Bereiche IIa und IIb. Somit gelten die oben getroffenen Aussagen zum Bereich Ia des kapazitiven Belastungsfalls analog zum Bereich Ib des induktiven Belastungsfalls.

Anzumerken ist, dass bei induktiver Belastung für den Fall, dass eine Kommutierungsanforderung zur normalen Kommutierung, die außerhalb der Bereich Ib und IIb gestellt wird immer ein Abbruch der Kommutierung erfolgt. Dies ist dadurch begründet, dass die in Schritt 403 getätigte Überprüfung nicht positiv ausfallen kann, da ein erster Thyristor 61a, der zum ersten Schaltelement 61 gehört und in Blockierrichtung zur induzierten Spannung vi liegt in keinem Fall vor dem Nulldurchgang der Stufenspannung vt frei werden kann, da der Nulldurchgang der Stufenspannung vt vor dem Nulldurchgang des Laststroms iL erfolgt. In diesem Fall bleibt die Kommutierungsanforderung bestehen und kann nach dem Spannungsnulldurchgang, also in den Bereichen Ib oder IIb durchgeführt werden.

Für die Zwangskommutierung ergeben sich für den induktiven Belastungsfall keine weiteren Besonderheiten.

## BEZUGSZEICHEN

| | |
|---|---|
| 1, | Regeltransformator, Primärseite, Sekundärseite |
| 1a, | Primärseite |
| 1b | Sekundärseite |
| 2 | Stammwicklung |
| 3 | Sekundärwicklung |
| 4a | Zuleitung |
| 4b | Ableitung |
| 5 | Schaltmodul |
| 6a, 6b | erster Lastzweig |
| 7a, 7b | zweiter Lastzweig |
| 8 | Regelwicklung |
| 9a, 9b | Kommutierungszelle |
| 10 | erste Klemme |
| 20 | zweite Klemme |
| 50 | Steuerungseinheit |
| 61 | Schaltelement |
| 62 | Schaltelement |
| 63 | Schaltelement |
| 64 | Schaltelement |
| 61a, 61b, 62a,... | Thyristoren |
| 301 | Ausgangszustand |
| 302 | Endzustand |
| 400 | Kommutierungsstrategie |

| | |
|---|---|
| 401 | Prüfung |
| 402 | Schritt |
| 403 | Prüfung |
| 404 | Schritt |
| 500 | alternatives Kommutierungsverfahren, Zwangskommutierung |
| 501 | Schritt |
| 502 | Schritt |
| 503 | Schritt |
| A | Anodenanschluss |
| K | Kathodenanschluss |
| G | Gate-Anschlus |
| iL | Laststrom |
| ISC | Scheitelwert des Kurzschlussstroms |
| $L_{\sigma,\,eff}$ | Streuinduktivität des Regeltransformators |
| vi | Induzierte Spannung |
| vmax | Grenzwert der Stufenspannung |
| vprim | Eingangsspannung |
| vsek | Ausgangsspannung |
| vt | Stufenspannung |
| Sact | aktueller Status |
| Sref | gewünschter Status |
| t0...t5 | Zeitpunkte |
| $\Delta$tNull | zeitlicher Abstand zum nächsten erwarteten Nulldurchgang der Spannung vt |
| $\varphi$ | Phasenverschiebung zwischen Laststrom iL und Stufenspannung vt |
| $\varphi$cap | negativer kapazitiver Grenzwert der Phasenverschiebung $\varphi$ |
| $\alpha$ | Zündwinkel der Thyristoren in rad |
| amin | Minimaler Zündwinkel bei Kommutierung im kapazitiven Bereich |
| amax | Maximaler Zündwinkel bei Kommutierung im kapazitiven Bereich |
| $\delta$ | Schonzeit der Thyristoren in rad |
| $\gamma$ | Überlappungszeit abhängig vom Zündwinkel $\alpha$ und dem Laststrom iL, die die Zeit während der Kommutierung in dem beide Schaltelemente 61,62 leitend sind, beschreibt |
| $\omega$ | Frequenz der induzierten Spannung vi in rad/s |
| tp1 | Schonzeit der Thyristoren in Sekunden |
| tkomm | Kommutierungszeitspanne definiert durch die Summe aus der Überlappungszeit $\gamma$ und der Schonzeit tp1der Thyristoren |
| tz2 | Zündzeitpunkt bei Zwangskommutierung |

## Patentansprüche

**1.** Verfahren zur Steuerung mindestens eines Schaltmoduls (5) bestehend aus einer ersten Kommutierungszelle (9a) und einer zweiten Kommutierungszelle (9b), die jeweils über eine erste Klemme (10) und eine zweite Klemme (20) einer Regelwicklung (8) eines Regeltransformators (1) zugeordnet sind, wobei jedes Schaltmodul (5) mit einer Zuleitung (4a) und einer Ableitung (4b) versehen ist, wobei die Kommutierungszellen (9a, 9b) umfassen:

   - ein erstes Schaltelement (61) das zwei antiparallel geschaltete Thyristoren (61a, 61b) besitzt;
   - ein zweites Schaltelement (62), das zwei antiparallel geschaltete Thyristoren (62a, 62b) besitzt;

   **gekennzeichnet durch** die folgenden Schritte:

   - dass eine Stufenspannung (vt) ermittelt wird, die zwischen der ersten Klemme (10) und der zweiten Klemme (20) anliegt und die Spannung über der Regelwicklung (8) des Regeltransformators (1) darstellt;
   - dass eine induzierte Spannung (vi) ermittelt wird, die die induzierte Spannung in der Regelwicklung (8) darstellt;
   - dass ein Laststrom (iL) erfasst wird, der aus der Ableitung (4b) der Kommutierungszelle (9a) fließt;
   - dass die Phasenverschiebung $\varphi$ zwischen Laststrom (iL) und Stufenspannung (vt) ermittelt wird;
   - dass nach Erhalt eines Kommutierungsbefehls zur Kommutierung eines Stroms vom ersten Schaltelement (61) auf das zweite Schaltelement (62) gemäß einer ersten Kommutierungsstrategie (400) eine erste Überprüfung durchgeführt wird, wobei eine erste Überprüfung (401a) umfasst:

• ob die Phasenverschiebung φ zwischen dem Laststrom (iL) und Spannung (vt) außerhalb eines Grenzbereichs liegt und
• das Ergebnis der ersten Überprüfung (401a) als positiv gewertet wird, wenn die Phasenverschiebung φ außerhalb des Grenzbereichs liegt;

- dass eine zweite Überprüfung (401c) durchgeführt wird, wobei eine zweite Überprüfung (401c) umfasst,

• ob die Zeit bis zum nächsten erwarteten Nulldurchgang der Spannung (vt) größer ist als eine Kommutierungszeitspanne (tkomm) und
• das Ergebnis als positiv gewertet wird, wenn dies der Fall ist.

- dass bei positiver erster und zweiter Überprüfung (401a, 401c) in einem Schritt (402) der Kommutierungsvorgang vorbereitet wird, indem ein erster Thyristor (61a, 61b), der zum ersten Schaltelement (61) gehört und in Blockierrichtung zur induzierten Spannung (vi) liegt, deaktiviert wird und ein zweiter Thyristor (62a, 62b), der zum zweiten Schaltelement (62) gehört und in Sperrrrichtung zur Spannung (vi) liegt, aktiviert wird;
- dass nach der Vorbereitung des Kommutierungsvorgangs bei Schritt (402):

• solange die Zeit bis zum erwarteten nächsten Nulldurchgang der Stufenspannung (vt) größer ist als eine Kommutierungszeitspanne (tkomm) (403c) eine dritte Überprüfung durchgeführt wird, ob der erste Thyristor (61a, 61b) frei geworden ist und die Prüfung (403a) als positiv gewertet wird, wenn dies der Fall ist; und
• wenn die dritte Überprüfung als positiv gewertet wird, in Schritt (404) eine Kommutierung eingeleitet wird, indem ein dritter Thyristor (62a, 62b), der zum zweiten Thyristor (62a, 62b) antiparallel liegt, aktiviert wird und ein vierter Thyristor (61a, 61b), der zum ersten Thyristor (61a, 61b) antiparallel liegt, deaktiviert wird; und
• wenn die erste und/oder zweite Überprüfung (401a, 402c) nicht als positiv gewertet wird, keine Kommutierung eingeleitet wird oder wenn die dritte Überprüfung (403a) nicht als positiv gewertet wird, die Kommutierung gemäß der ersten Kommutierungsstrategie abgebrochen wird;

- wobei nach Schritt (402) zur Vorbereitung des Kommutierungsvorgangs

- solange die Zeit bis zum erwarteten nächsten Nulldurchgang der Stufenspannung (vt) größer ist als die Kommutierungszeitspanne (tkomm), eine vierte Überprüfung erfolgt, ob der Betrag der induzierten Spannung (vi) einen Grenzwert der Stufenspannung (vmax) unterschreitet und das Ergebnis als positiv gewertet wird wenn dies der Fall ist;
- wenn das Ergebnis der dritten Überprüfung und der vierten Überprüfung als positiv gewertet werden, eine Kommutierung eingeleitet wird und
- ansonsten die Kommutierung abgebrochen wird, indem der zweite Thyristor (62a, 62b) deaktiviert und der erste Thyristor (61a, 61b) aktiviert werden.

2. Verfahren nach dem vorigen Ansprüche, wobei
die Kommutierung abgebrochen wird, indem der zweite Thyristor (62a, 62b) deaktiviert wird und der erste Thyristor (61a, 61b) aktiviert wird.

3. Verfahren nach einem der vorigen Ansprüche wobei,

- wenn die Kommutierung gemäß der ersten Kommutierungsstrategie (400) öfter als eine vorgegebene Anzahl (nmax) abgebrochen wurde und/oder;
- die Phasenverschiebung zwischen Laststrom (iL) und Stufenspannung (vt) innerhalb des Grenzbereichs liegt;
- eine Kommutierung gemäß eines zweiten Kommutierungsverfahrens (500) durchgeführt wird, wobei
- nach Erhalt des Kommutierungsbefehls:

• ein Zündzeitpunkt (tz2) in einem Schritt (501) abgewartet wird;
• in einem Schritt (502) bei Erreichen des Zündzeitpunkts (tz2) der vierte Thyristor deaktiviert und der dritte Thyristor aktiviert werden:
• in einem Schritt (503) nach dem Nulldurchgang der Stufenspannung (vt) der erste Thyristor deaktiviert und der zweite Thyristor aktiviert werden.

4. Verfahren nach dem vorigen Anspruch wobei,
Der Zündzeitpunkt (tz2) gemäß einer Funktion der Schonzeit (tp1) der Thyristoren sowie der maximalen Strombelastung, die aus der zweiten Kommutierungsstrategie (500) resultiert, ermittelt wird.

5.  Verfahren nach einem der vorigen Ansprüche, wobei die Kommutierungszeitspanne (tkomm) der Summe aus der Überlappungszeit (y) und der Schonzeit (tp1) der Thyristoren entspricht.

6.  Verfahren nach einem der vorigen Ansprüche, wobei die Überlappungszeit ($\gamma$) vom Zündwinkel (a) und dem Laststrom (iL) abhängt und eine Zeit beschreibt in der beide Schaltelemente (61, 62) einer Kommutierungszelle (9a) während eines Kommutierungsvorgangs leitfähig sind.

7.  Verfahren nach einem der vorigen Ansprüche, wobei für den Grenzbereich der Phasenverschiebung $\varphi$ zwischen Laststrom (iL) und Stufenspannung (vt) gilt:
    $\varphi cap < \varphi \leq 0$ mit $\varphi cap < 0$

8.  Verfahren nach einem der vorigen Ansprüche, wobei

    - ein Thyristor aktiviert ist, wenn dessen Gate-Anschluss (G) angesteuert ist, um ein Zünden zu ermöglichen und
    - ein Thyristor deaktiviert ist, wenn dessen Gate-Anschluss (G) nicht angesteuert ist, um ein Zünden des Thyristors zu verhindern.

9.  Computerprogrammprodukt, wobei das Computerprogrammprodukt auf einem nicht-flüchtigen und computerlesbaren Medium bereitgestellt ist und eine Steuerungseinheit (50) veranlasst, ein Verfahren nach einem der Ansprüche 1 bis 8 auszuführen.

**Claims**

1.  Method of controlling at least one switching module (5) consisting of a first commutation cell (9a) and a second commutation cell (9b), which are each associated with a regulating winding (8) of a regulating transformer (1) by way of a first terminal (10) and a second terminal (20), wherein each switching module (5) is provided with a feed-in line (4a) and a feed-out line (4b) and wherein the commutation cells (9a, 9b) comprise:

    - a first switching element (61) having two thyristors (61a, 61b) in antiparallel connection; and
    - a second switching element (62) having two thyristors (62a, 62b) in antiparallel connection;

    **characterised by** the following steps:

    - a tap voltage (vt) present between the first terminal (10) and the second terminal (20) and representing the voltage across the regulating winding (8) of the regulating transformer (1) is determined;
    - an induced voltage (vi) representing the induced voltage in the regulating winding (8) is determined;
    - a load current (iL) flowing from the feed-out line (4b) of the commutation cell (9a) is detected;
    - the phase displacement $\varphi$ between load current (iL) and tap voltage (vt) is determined;
    - after receipt of a commutation command for commutation of a current from the first switching element (61) to the second switching element (62) then in accordance with a first commutation strategy (400) a first check is carried out, wherein the first check (401a) comprises:

      • whether the phase displacement $\varphi$ between the load current (iL) and voltage (vt) lies outside a limit range and
      • the result of the first check (401a) is evaluated as positive when the phase displacement $\varphi$ lies outside the limit range;

    - a second check (401c) is carried out, wherein the second check (401c) comprises:

      • whether the time to the next anticipated zero transition of the voltage (vt) is greater than a commutation time period (tkomm) and
      • the result is evaluated as positive if this is the case;

    - if the first and second checks (401a, 401c) are positive the commutation process is prepared in a step (402) in that a first thyristor (61a, 61b) belonging to the first switching element (61) and lying in blocking direction with respect to the induced voltage (vi) is deactivated and a second thyristor (62a, 62b) belonging to the second switching element (62) and lying in blocking direction with respect to the voltage (vi) is activated; and
- after preparation of the commutation process, then in step (402):

  • as long as the time to the anticipated next zero transition of the tap voltage (vt) is greater than a commutation time period (tkomm) (403c) a third check is carried out as to whether the first thyristor (61a, 61b) has become free and the check (403a) is evaluated as positive if this is the case; and
  • if the third check is evaluated as positive a commutation is initiated in step (404) in that a third thyristor (62a, 62b) lying antiparallel to the second thyristor (62a, 62b) is activated and a fourth thyristor (61a, 61b) lying antiparallel to the first thyristor (61a, 61b) is deactivated; and
  • if the first check (401a) and/or second check (402c) is or are not evaluated as positive no commutation is initiated or if the third check (403a) is not evaluated as positive the commutation in accordance with the first commutation strategy is broken off.

  - wherein after step (402) for preparation of the commutation process

  • -as long as the time to the anticipated next zero transition of the tap voltage (vt) is greater than the commutation time period (tkomm) a fourth check is carried out as to whether the amount of the induced voltage (vi) falls below a limit value of the tap voltage (vmax) and the result is evaluated as positive if this is the case;
  • -if the result of the third check and that of the fourth check are evaluated as positive a commutation is initiated; and
  • -otherwise the commutation is broken off in that the second thyristor (62a, 62b) is deactivated and the first thyristor (61a, 61b) is activated.

2. Method according to the preceding claim, wherein the commutation is broken off in that the second thyristor (62a, 62b) is deactivated and the first thyristor (61a, 61b) is activated.

3. Method according to any one of the preceding claims, wherein:

   - if the commutation in accordance with the first commutation strategy (400) has been broken off more often than a predetermined number (nmax) and/or;
   - the phase displacement between load current (iL) and tap voltage (vt) lies within the limit range;
   - a commutation in accordance with second commutation process (500) is carried out, wherein:
   - after receipt of the commutation command:

     • a trigger instant (tz2) is waited out in a step (501);
     • the fourth thyristor is deactivated and the third thyristor activated in a step (502) when the trigger instant (tz2) is reached; and
     • the first thyristor is deactivated and the second thyristor activated in a step (503) after the zero transition of the tap voltage (vt).

4. Method according to the preceding claim, wherein:

   - the trigger instant (tz2) is determined in accordance with a function of the hold-off interval (tp1) of the thyristors and the maximum current load resulting from the second commutation strategy (500).

5. Method according to any one of the preceding claims, wherein the commutation time period (tkomm) corresponds with the sum of the overlap time ($\gamma$) and the hold-off interval (tp1) of the thyristors.

6. Method according to any one of the preceding claims, wherein the overlap time ($\gamma$) depends on the trigger angle ($\alpha$) and the load current (iL) and describes a time in which both switching elements (61, 62) of a commutation cell (9a) are conductive during a commutation process.

7. Method according to any one of the preceding claims, wherein;
   $\varphi cap < \varphi \leq 0$, wherein $\varphi cap < 0$,
   for the limit range of the phase displacement $\varphi$ between load current (iL) and tap voltage (vt).

**EP 3 327 911 B1**

**8.** Method according to any one of the preceding claims, wherein

- a thyristor is activated, when the gate terminal (G) thereof is driven, so as to enable triggering and
- a thyristor is deactivated, when the gate terminal (G) thereof is not driven, so as to prevent triggering of the thyristor.

**9.** Computer program product, wherein the computer program product is provided on a non-volatile, computer-readable medium and causes a control unit (50) to execute a method according to any one of claims 1 to 8.

**Revendications**

**1.** Procédé de commande d'au moins un module de commutation (5) comprenant une première cellule de commutation (9a), et une seconde cellule de commutation (9b) respectivement associées par une première borne (10) et une seconde borne (20) à un enroulement de réglage (8) d'un transformateur (1), chaque module de commutation (5) étant muni d'une ligne d'entrée (4a) et d'une ligne de sortie (4b),
les cellules de commutation (9a, 9b) comprenant :

- un premier élément de commutation (61) comportant deux thyristors (61a, 61b) branchés en mode antiparallèle,
- un second élément de commutation (62) comportant deux thyristors (62a, 62b) branchés en mode antiparallèle,

procédé **caractérisé en ce qu'**il consiste à :

- déterminer une tension d'échelon (vt) entre la première borne (10) et la seconde borne (20) et qui représente la tension de l'enroulement de réglage (8) du transformateur de réglage (1),
- déterminer une tension induite (vi) qui représente la tension induite dans l'enroulement de réglage (8),
- saisir un courant de charge (iL) à la sortie (4b) de la cellule de commutation (9a),
- déterminer le déphasage (φ) entre le courant de charge (iL) et la tension d'échelon (vt),
- après avoir obtenu un ordre de commutation pour commuter le courant du premier élément de commutation (61) sur le second élément de commutation (62) selon une première stratégie de commutation (400),

* on effectue un premier contrôle (401a) pour contrôler :

• si le déphasage (φ) entre le courant de charge (iL) et la tension (vt) est extérieur à une plage limite, et
• considérer comme positif le résultat du premier contrôle (401a) si le déphasage (φ) est à l'extérieur de la plage limite,

* on effectue un second contrôle (401c) pour contrôler :

• si le temps jusqu'au prochain passage par zéro prévisible de la tension (vt) est supérieur à l'intervalle de temps de commutation (tkomm), et
• considérer le résultat comme positif si cela est le cas,

- pour un premier et un second contrôle (401a, 401c) positifs, préparer dans une étape (402) l'opération de commutation en désactivant un premier thyristor (61a, 61b) du premier élément de commutation (61) et qui est dans la direction de blocage de la tension induite (vi) et activer un second thyristor (62a, 62b) du second élément de commutation (62) et qui est dans la direction de blocage de la tension (vi),
- après la préparation de l'opération de commutation, dans l'étape (402) :

* aussi longtemps que le temps jusqu'au prochain passage par zéro prévisible de la tension d'échelon (vt) est supérieur à une durée de commutation (tkomm) (403c), effectuer un troisième contrôle pour vérifier si le premier thyristor (61a, 61b) a été libéré et considérer le contrôle (403a) comme positif si cela est le cas, et
* si le troisième contrôle est positif, dans l'étape (404) lancer une commutation en activant un troisième thyristor (62a, 62b) en montage antiparallèle par rapport au second thyristor (62a, 62b) et en désactivant un quatrième thyristor (61a, 61b) en montage antiparallèle par rapport au premier thyristor (61a, 61b), et
* si le premier et/ou le second contrôle (401a, 402c) n'ont pas été positifs, ne pas lancer de commutation ou si le troisième contrôle (403a) n'est pas positif, arrêter la commutation selon la première stratégie de commutation,

procédé selon lequel après l'étape (402) pour préparer l'opération de commutation :

- aussi longtemps que le temps jusqu'au prochain passage par zéro prévisible de la tension d'échelon (vt) est supérieur à la durée de commutation (tkomm), on effectue un quatrième contrôle pour vérifier si la valeur de la tension induite (vi) passe en dessous d'un seuil de tension d'échelon (vmax) et le résultat est considéré comme positif si cela est le cas,
- si le résultat du troisième contrôle et celui du quatrième contrôle sont positif, lancer une commutation, et
- au cas contraire, arrêter la commutation en désactivant le second thyristor (62a, 62b) et en activant le premier thyristor (61a, 61b).

2. Procédé selon la revendication précédente,
selon lequel
on arrête la commutation en désactivant le second thyristor (62a, 62b) et en activant le premier thyristor (61a, 61b).

3. Procédé selon l'une des revendications précédentes,
selon lequel

- si la commutation selon la première stratégie de commutation (400) a été interrompue un nombre de fois supérieur à un nombre de fois donné (nmax), et/ou
- si le déphasage entre le courant de charge (iL) et la tension d'échelon (vt) se situent dans la plage limite,
- effectuer une commutation selon un second procédé de commutation (500), selon lequel
- après réception de l'ordre de commuter :

  * attendre l'instant d'allumage (tz2) dans une étape (501),
  * dans une étape (502), lorsqu'on atteint l'instant d'allumage (tz2) désactiver le quatrième thyristor et activer le troisième thyristor,
  * dans une étape (503) après le passage par zéro de la tension d'échelon (vt) désactiver le premier thyristor et activer le second thyristor.

4. Procédé selon l'une des revendications précédentes,
selon lequel
on détermine l'instant d'allumage (tz2) en fonction du temps de blocage (tp1) des thyristors et de la charge maximale d'intensité, résultant de la seconde stratégie de commutation (500).

5. Procédé selon l'une des revendications précédentes,
selon lequel
la durée de commutation (tkomm) correspond à la somme de la durée de chevauchement (y) et du temps de blocage (tp1) des thyristors.

6. Procédé selon l'une des revendications précédentes,
selon lequel
la durée de chevauchement dépend de l'angle d'allumage ($\alpha$) et du courant de charge (iL) et correspond à une durée au cours de laquelle les deux éléments de commutation (61, 62) d'une cellule de commutation (9a) sont conducteurs au cours de l'opération de commutation.

7. Procédé selon l'une des revendications précédentes,
selon lequel
la plage limite du déphasage ($\varphi$) entre le courant de charge (iL) et la tension de charge (vt) est donnée par la relation $\varphi cap < \varphi \leq 0$ et $\varphi cap < 0$

8. Procédé selon l'une des revendications précédentes,
selon lequel

- on active un thyristor si sa borne de porte (G) est commandée pour permettre l'allumage, et
- on désactive un thyristor si sa borne de porte (G) n'est pas commandée, pour éviter l'allumage du thyristor.

9. Produit programme d'ordinateur, fourni sur un support non volatile et lisible par un ordinateur ainsi qu'une unité de commande (50) pour exécuter un procédé selon l'une des revendications 1 à 8.

Fig. 1

EP 3 327 911 B1

Fig. 2a

Fig. 2b

EP 3 327 911 B1

Fig. 3

## Fig. 4

| | |
|---|---|
| 301 | 61a on<br>61b on<br>62a off<br>62b off |

Sact ≠ Sref

400

500

φ < φcap v φ > 0 (401a)
∧
n < nmax (401b)
∧
tkomm < ΔtNull (401c)

φcap < φ <= 0 (401a)
∧
n ≥ nmax (401b)

401

| | |
|---|---|
| 402 | 61a off<br>61b on<br>62a on<br>62b off |

| | |
|---|---|
| 501 | 61a on<br>61b on<br>62a off<br>62b off |

61a free (403a)
∧
|vi| < vmax (403b)
∧
tkomm < ΔtNull (403c)

t=tz2

| | |
|---|---|
| 502 | 61a on<br>61b off<br>62a off<br>62b on |

403

t=tNull

| | |
|---|---|
| 404 | 61a off<br>61b off<br>62a on<br>62b on |

| | |
|---|---|
| 503 | 61a off<br>61b off<br>62a on<br>62b on |

| | |
|---|---|
| 302 | 61a off<br>61b off<br>62a on<br>62b on |

Sact = Sref

EP 3 327 911 B1

21

EP 3 327 911 B1

Fig. 5a

# Fig. 5b

t0                    t1                    t2

t3                    t4a / t4b             t5

Fig. 6

(777EP)

Fig. 7

(777EP)

Fig. 8

φ < φcap

vt

iL

Ia

IIa

φ > 0

vt

iL

Ib

IIb

26

EP 3 327 911 B1

(777EP)

**IN DER BESCHREIBUNG AUFGEFÜHRTE DOKUMENTE**

**In der Beschreibung aufgeführte Patentdokumente**

- US 3619765 A

**In der Beschreibung aufgeführte Nicht-Patentliteratur**

- Control of Thyristor-Based Commutation Cells. *IEEE Energy Conversion Congress und Exposition,* September 2012